(19) Europäisches Patentamt / European Patent Office / Office européen des brevets

(11) EP 2 301 997 A1

(12) **EUROPEAN PATENT APPLICATION**
published in accordance with Art. 153(4) EPC

(43) Date of publication:
**30.03.2011 Bulletin 2011/13**

(21) Application number: **09794376.5**

(22) Date of filing: **02.07.2009**

(51) Int Cl.:
***C08L 21/00*** (2006.01) ***C08K 3/06*** (2006.01)
***C08K 5/13*** (2006.01) ***C08K 5/47*** (2006.01)

(86) International application number:
**PCT/JP2009/062138**

(87) International publication number:
**WO 2010/004930 (14.01.2010 Gazette 2010/02)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **07.07.2008 JP 2008177119**
**01.07.2009 JP 2009156872**

(71) Applicant: **Bridgestone Corporation**
**Tokyo 104-8340 (JP)**

(72) Inventor: **SATOU Yoshitaka**
**Kodaira-shi**
**Tokyo 187-8531 (JP)**

(74) Representative: **Lamb, Martin John Carstairs**
**Marks & Clerk LLP**
**90 Long Acre**
**London**
**WC2E 9RA (GB)**

(54) **RUBBER COMPOSITION**

(57) [Problem]

Provided is a rubber composition which is remarkably reduced in generation of rubber burning and is excellent in an adhesive property with metal such as a steel cord and which exerts a stable adhesive property with less change with the passage of time while maintaining processability and a high wet heat resistant adhesive property in compounding.

[Means for solving]

The above rubber composition is **characterized by** comprising a rubber component, sulfur, a sulfenamide base vulcanization accelerator represented by the following Formula (I) and a compound having a disubstituted or trisubstituted benzene ring in which at least one of the substituents is a hydroxyl group:

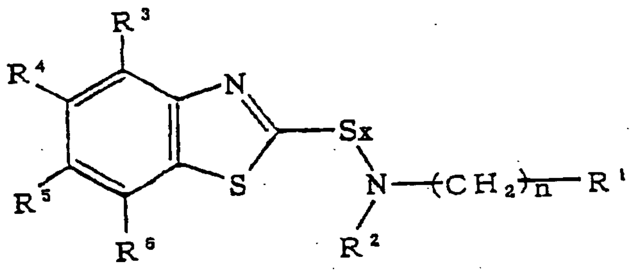

(I)

(wherein $R^1$ is a branched alkyl group having 3 to 12 carbon atoms; $R^2$ is a linear alkyl group having 1 to 10 carbon atoms or a branched alkyl group having 3 to 10 carbon atoms; $R^3$ to $R^6$ are a hydrogen atom, a linear alkyl group or alkoxy group having 1 to 4 carbon atoms or a branched alkyl group or alkoxy group having 3 to 4 carbon atoms, and they may be the same or different; x represents an integer of 1 or 2, and n represents an integer of 0 or 1).

EP 2 301 997 A1

## Description

### Technical Field

The present invention relates to a rubber composition containing a specific sulfenamide base vulcanization accelerator and a compound having a specific structure, particularly to a rubber composition which is excellent in adhesion durability with metal reinforcing materials such as steel cords used for rubber products such as tires, industrial belts.

### Background Art

Composite materials prepared by coating metal reinforcing materials such as steel cords with a rubber composition for the purpose of reinforcing rubber to enhance strength and durability thereof have so far been used for rubber products to which strength is specifically required such as tires for cars, conveyor belts, hoses and the like.
The rubber-metal composite materials require adhesion between rubber and metal reinforcing materials which is stable and less changed with the passage of time in order to obtain reliability with exerting a high reinforcing effect.
Further, when rubber is adhered to metal, a method in which rubber and metal are bonded at the same time as vulcanization, that is, a direct vulcanization bonding method is known, and in this case, it is considered to be effective that a sulfenamide base vulcanization accelerator which provides vulcanization reaction with a delayed action is used when vulcanization of rubber and bonding of rubber and metal are carried out at the same time.
At present, N,N-dicyclohexyl-2-benzothiazolylsulfenamide (hereinafter abbreviated as "DCBS") represented by the following formula is known as a vulcanization accelerator which provides vulcanization reaction with the largest delayed action among commercially available sulfenamide base vulcanization accelerators:

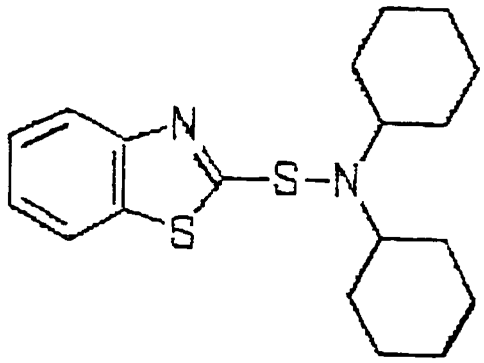

Further, when a larger delayed action than that in vulcanization reaction of DCBS is required, a vulcanization retardant other than a sulfenamide base vulcanization accelerator is used in combination. N-(cyclohxylthio)phthalimide (hereinafter abbreviated as "CTP") is known as a representative vulcanization retardant which is commercially available, but it has already been known that if this CTP is compounded with rubber in a large amount, it exerts an adverse effect on the physical properties of the vulcanized rubber and that it causes blooming which deteriorates the appearance of the vulcanized rubber and exerts an adverse effect on an adhesive property thereof.
Further, bissulfenamide represented by a specific formula (refer to, for example, patent document 1) and benzothiazolylsulfenamide base vulcanization accelerators (refer to, for example, patent document 2) obtained by using an amine originating in natural fats and oils as a raw material are known as sulfenamide base vulcanization accelerators other than DCBS described above.
However, only rubber physical properties are described with respect to the sulfenamide base vulcanization accelerators described in the patent documents 1 and 2, and the adhesion performances are neither described nor suggested therein. In addition thereto, it is neither described nor suggested at all that the sulfenamide compound of the present invention can be used as a novel vulcanization accelerator for rubbers.
Further, several production processes for the sulfenamide compounds used in the present invention are known in patent documents 3, 4 and 5, but it is neither described nor suggested at all that the above compounds can be used as a novel vulcanization accelerator for rubbers, and the adhesion performance with a steel cord which is brought by the above vulcanization accelerators is neither described nor suggested as well.
On the other hand, various studies are carried out in order to enhance an adhesive property, particularly a wet heat resistant adhesive property between rubber and a metal reinforcing material in direct vulcanization bonding.
Known are, for example, rubber compositions compounded with resorcin or resorcin-formaldehyde resins (RF resin)

obtained by condensing resorcin with formalin for the purpose of enhancing a wet heat resistant adhesive property (refer to, for example, patent document 6). It is sure that a wet heat resistant adhesive property between a steal cord and rubber is surprisingly enhanced by compounding the above RF resin and the like.
However, resorcin and an RF resin have a very high polarity and therefore are poor in compatibility with rubber, and involved therein is the problem that the compounded rubber has a large change with the passage of time depending on the conditions of mixing, compounding, storing and the like and can not exert a stable heat resistant adhesive property and a wet heat adhesive property.

Prior Art Document

Patent Document

Patent document 1: Japanese Patent Application Laid-Open No. 2005-139082 (claims, examples and others)
Patent document 2: Japanese Patent Application Laid-Open No. 2005-139239 (claims, examples and others)
Patent document 3: EP0314663A1 (claims, examples and others)
Patent document 4: British Patent No. 1177790 (claims, examples and others)
Patent document 5: Japanese Patent Publication Sho 48 No. 11214 (claims, examples and others)
Patent document 6: Japanese Patent Application Laid-Open No. 2001-234140 (claims, examples and others)

Outline of the Invention

Problems to be solved by the Invention

In light of the conventional problems described above, the present inventors have tried to solve them, and an object of the present invention is to provide a rubber composition remarkably reduced in generation of rubber burning by using a vulcanization accelerator having a vulcanization retarding effect which is equal to or higher than that of DCBS without using a vulcanization retardant which is likely to bring about problems such as deterioration in the physical properties, blooming of the vulcanized rubber and the like and to provide a rubber composition compounded with resorcin and an RF resin which is excellent in an adhesive property with metal such as a steel cord in which a stable heat resistant adhesive property with less change with the passage of time and a wet heat adhesive property are exerted while maintaining processability in compounding and a high wet heat resistant adhesive property.

Means for solving the Problems

Intensive studies on the conventional problems described above repeated by the present inventors have resulted in finding that a rubber composition compounding a prescribed amount of a composition comprising a specific sulfenamide base vulcanization accelerator and a compound having a specific structure such as resorcin and an RF resin with a rubber component provides a rubber composition which is excellent in an adhesive property with metal such as a steel cord and which exerts a stable heat resistant adhesive property with less change with passage of time and a wet heat adhesive property while maintaining processability in compounding and a high wet heat resistant adhesive property, and thus the present invention has come to be completed.
That is, the present invention comprising the following items (1) to (16).

(1) A rubber composition comprising a rubber component, sulfur, a sulfenamide base vulcanization accelerator represented by the following Formula (I) and a compound having a disubstituted or trisubstituted benzene ring in which at least one of the substituents is a hydroxyl group:

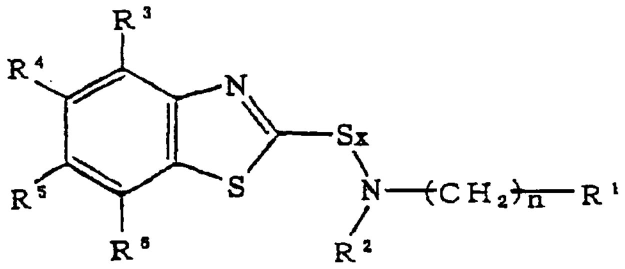

(I)

(wherein $R^1$ is a branched alkyl group having 3 to 12 carbon atoms; $R^2$ is a linear alkyl group having 1 to 10 carbon atoms or a branched alkyl group having 3 to 10 carbon atoms; $R^3$ to $R^6$ are a hydrogen atom, a linear alkyl group or alkoxy group having 1 to 4 carbon atoms or a branched alkyl group or alkoxy group having 3 to 4 carbon atoms, and they may be the same or different; x represents an integer of 1 or 2, and n represents an integer of 0 or 1).

(2) The rubber composition as described in the above item (1), comprising 0.1 to 10 parts by mass of the sulfenamide base vulcanization accelerator represented by Formula (I) and 0.1 to 6 parts by mass of the compound having a disubstituted or trisubstituted benzene ring in which at least one of the substituents is a hydroxyl group based on 100 parts by mass of the rubber component.

(3) The rubber composition as described in the above item (1), comprising 0.3 to 10 parts by mass of sulfur based on 100 parts by mass of the rubber component.

(4) The rubber composition as described in the above item (1), comprising 0.3 to 10 parts by mass of sulfur, 0.1 to 10 parts by mass of the sulfenamide base vulcanization accelerator represented by Formula (I) and 0.1 to 6 parts by mass of the compound having a disubstituted or trisubstituted benzene ring in which at least one of the substituents is a hydroxyl group based on 100 parts by mass of the rubber component.

(5) The rubber composition as described in the above item (1), wherein the branched alkyl group of $R^1$ and $R^2$ in Formula (I) has a branch at an $\alpha$-position.

(6) The rubber composition as described in the above item (1), wherein $R^1$ in Formula (I) is a tert-butyl group, and n is 0.

(7) The rubber composition as described in the above item (1), wherein $R^1$ in Formula (I) is a tert-butyl group; $R^2$ is a linear alkyl group having 1 to 6 carbon atoms or a branched alkyl group having 3 to 6 carbon atoms; and $R^3$ to $R^6$ are hydrogen atoms.

(8) The rubber composition as described in the above item (1), wherein $R^1$ in Formula (I) is a tert-butyl group; n is 0; $R^2$ is a linear alkyl group having 1 to 6 carbon atoms or a branched alkyl group having 3 to 6 carbon atoms; and $R^3$ to $R^6$ are hydrogen atoms.

(9) The rubber composition as described in the above item (1), wherein $R^1$ in Formula (I) is a tert-butyl group; n is 0; $R^2$ is a methyl, ethyl or n-propyl group; and $R^3$ to $R^6$ are hydrogen atoms.

(10) The rubber composition as described in the above item (1), wherein $R^1$ in Formula (I) is a tert-butyl group; n is 0; $R^2$ is an ethyl group; and $R^3$ to $R^6$ are hydrogen atoms.

(11) The rubber composition as described in the above item (1), wherein the compound having a disubstituted or trisubstituted benzene ring in which at least one of the substituents is a hydroxyl group is a compound represented by the following Formula (II):

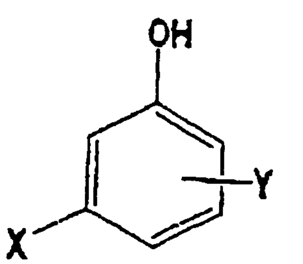

(II)

(wherein X represents a hydroxyl group, a carboxyl group or - $COOC_mH_{2m+1}$ (m is any integer of 1 to 5), and Y is present in a 2-, 4-, 5- or 6-position and represents a hydrogen atom, a hydroxyl group or a substituent represented by the following Formula (III)):

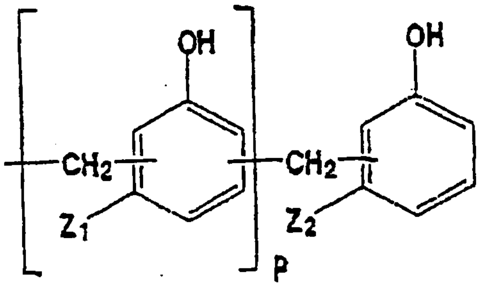

(III)

(wherein $Z_1$ and $Z_2$ each represent independently a hydroxyl group, a carboxyl group or $-COOC_nH_{2n+1}$ (n is any integer of 1 to 5), and p represents any integer of 1 to 7).

(12) The rubber composition as described in the above item (1), further comprising cobalt and/or a compound containing cobalt.

(13) The rubber composition as described in the above item (12), wherein a content of cobalt and/or the compound containing cobalt is 0.03 to 3 parts by mass in terms of a cobalt amount based on 100 parts by mass of the rubber component.

(14) The rubber composition as described in the above item (13) or (14), wherein the compound containing cobalt is a cobalt salt of organic acid.

(15) The rubber composition as described in any one of the above items (1) to (14), wherein the rubber component contains at least one of natural rubber and polyisoprene rubber.

(16) The rubber composition as described in any one of the above items (1) to (14), wherein the rubber component comprises 50 % by mass or more of natural rubber and the balance of a synthetic rubber.

Effects of the Invention

According to the present invention, obtained is a rubber composition which is remarkably reduced in generation of rubber burning and is excellent in an adhesive property with metal such as a steel cord and which exerts a stable heat resistant adhesive property and a wet heat adhesive property with less change with the passage of time observed in a compounded rubber containing resorcin and an RF resin while maintaining processability in compounding and a high wet heat resistant adhesive property.

Mode for Carrying Out the Invention

The embodiments of the present invention shall be explained below in details.

The rubber composition of the present invention is characterized by comprising a rubber component, sulfur, a sulfenamide base vulcanization accelerator represented by the following Formula (I) and a compound having a disubstituted or trisubstituted benzene ring in which at least one of the substituents is a hydroxyl:

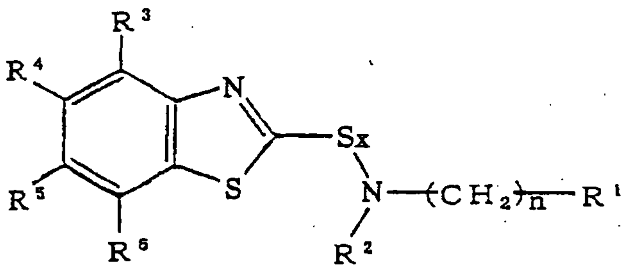

(I)

(wherein $R^1$ is a branched alkyl group having 3 to 12 carbon atoms; $R^2$ is a linear alkyl group having 1 to 10 carbon atoms or a branched alkyl group having 3 to 10 carbon atoms; $R^3$ to $R^6$ are a hydrogen atom, a linear alkyl group or alkoxy group having 1 to 4 carbon atoms or a branched alkyl group or alkoxy group having 3 to 4 carbon atoms, and they may be the same or different; x represents an integer of 1 or 2, and n represents an integer of 0 or 1).

The rubber component used in the present invention shall not specifically be restricted as long as it is rubber used for rubber products such as tires, industrial belts and the like, and if it is a rubber component having a double bond in a principal chain, it can be cross-linked by sulfur. Accordingly, the sulfenamide base vulcanization accelerator represented by Formula (I) described above functions for it, and natural rubber and/or a diene base synthetic rubber are used. Capable of being used is, to be specific, at least one of natural rubber, isoprene rubber, styrene-butadiene copolymers, butadiene rubber, ethylene-propylene-diene copolymers, chloroprene rubber, halogenated butyl rubber, acrylonitrile-butadiene rubber and the like.
At least one of the natural rubber and the isoprene rubber is preferably contained from the viewpoint of an adhesive property with metal reinforcing materials such as steel cords, and the rubber component comprises more preferably 50 % by mass or more of the natural rubber and the balance of at least one rubber selected from the synthetic rubbers described above from the viewpoint of durability of the belt rubber.
The sulfenamide base vulcanization accelerator represented by Formula (I) described above according to the present invention has not yet so far been reported in the form of combination with a cobalt base adhesive and has a vulcanization retarding effect equal to that of N,N-dicyclohexyl-2-benzothiazolylsulfenamide, and it is excellent in adhesion durability in a direct vulcanization bonding with metal reinforcing materials such as steel cords and can suitably be used for a rubber composition for coating rubber products having a large thickness.
Further, among the sulfenamide base vulcanization accelerators represented by Formula (I) described above, most preferably used as the vulcanization accelerator from the viewpoints of an adhesive property and a vulcanization retarding effect is the sulfenamide compound in which $R^1$ is tert-butyl; x is 1 or 2, and n is 0; $R^2$ is preferably the linear group, and among the linear groups, $R^2$ is preferably methyl, ethyl, n-propyl or n-butyl, most preferably methyl or ethyl; and $R^3$ to $R^6$ are preferably hydrogen atoms. It is the first time in the present invention that the above sulfenamide base vulcanization accelerators are used as a vulcanization accelerator, and while they have a larger vulcanization retarding effect than that of N,N-dicyclohexyl-2-benzothiazolylsulfenamide known as a vulcanization accelerator providing vulcanization reaction with the largest delayed action property among conventional sulfenamide base vulcanization accelerators, they have a sufficiently high vulcanization accelerating performance compatible with the above effect. In addition thereto, they are excellent in adhesion durability in a direct vulcanization bonding with metal reinforcing materials such as steel cords. Accordingly, they can suitably be used for rubber products having a large thickness and rubber compositions for coating which are excellent in adhesion durability in a direct vulcanization bonding with metal reinforcing materials such as steel cords.
In the present invention, $R^1$ in the sulfenamide compound represented by Formula (I) described above represents a branched alkyl group having 3 to 12 carbon atoms. If this $R^1$ is a branched alkyl group having 3 to 12 carbon atoms, the compound represented by Formula (I) has a good vulcanization accelerating performance and can be enhanced in an adhesion performance.
The specific examples of $R^1$ in the compound represented by Formula (I) described above include isopropyl, isobutyl, sec-butyl, tert-butyl, isoamyl (isopentyl), neopentyl, tert-amyl (tert-pentyl), isohexyl, tert-hexyl, isoheptyl, tert-heptyl, isooctyl, tert-octyl, isononyl, tert-nonyl, isodecyl, tert-decyl, isoundecyl, tert-undecyl, isododecyl, tert-dodecyl and the like. Among them, $R^1$ has preferably a branch at an $\alpha$-position from the viewpoints of the vulcanization speed, the adhesive property, the accumulativeness in human bodies and the like, and it is more preferably a tert-alkyl group having 3 to 12 carbon atoms from the viewpoint of the effect that a suited scorch time is obtained. In particular, tert-butyl, tert-amyl (tert-pentyl), tert-dodecyl and triisobutyl, especially tert-butyl are economically excellent from the viewpoints of the synthetic aspect and the availability of the raw materials, and they are particularly preferred from the viewpoints of providing the same vulcanization speed as that of DCBS (DZ) and the higher adhesive property.
$R^2$ in the sulfenamide compound represented by Formula (I) described above represents a linear alkyl group having 1 to 10 carbon atoms or a branched alkyl group having 3 to 10 carbon atoms. If this $R^2$ is a linear alkyl group having 1 to 10 carbon atoms or a branched alkyl group having 3 to 10 carbon atoms, the compound represented by Formula (I) has a good vulcanization accelerating performance and can be enhanced in an adhesion performance.
The specific examples of $R^2$ in the compound represented by Formula (I) described above include methyl, ethyl, n-propyl, isopropyl, n-butyl, isobutyl, sec-butyl, tert-butyl, n-amyl (n-pentyl), isoamyl (isopentyl), neopentyl, tert-amyl (tert-pentyl), n-hexyl, isohexyl, n-heptyl, isoheptyl, n-octyl, isooctyl, nonyl, isononyl, decyl and the like. Among them, $R^2$ is preferably a linear alkyl group having 1 to 8 carbon atoms or a branched alkyl group having 3 to 8 carbon atoms, more preferably a linear alkyl group having 1 to 6 carbon atoms or a branched alkyl group having 3 to 6 carbon atoms from the viewpoint of the effects such as easiness of the synthesis and the costs of the raw materials, and it is preferably methyl, ethyl, n-propyl, isopropyl, n-butyl, isobutyl or sec-butyl. When $R^2$ is a branched alkyl group having 3 to 8 carbon atoms, $R^2$ has preferably a branch at an $\alpha$-position from the viewpoints of the vulcanization speed, the adhesive property, the low accumulativeness in human bodies and the like.
In particular, the linear alkyl groups having the above described number of carbon atoms are preferred rather to the branched alkyl groups having the above described number of carbon atoms from the viewpoint of obtaining the suitable Mooney scorch time and the high steel cord adhesion. This is because of the reasons that the branched alkyl groups

further retard the vulcanization and therefore reduce the productivity and that when compared with the linear alkyl groups having the same number of carbon atoms, the branched alkyl groups deteriorate the adhesive property. Among them, methyl, ethyl, n-propyl and n-butyl which are linear alkyls group having 4 or less carbon atoms are most preferred.

$R^3$ to $R^6$ in the sulfenamide compound represented by Formula (I) described above are a hydrogen atom, a linear alkyl group or alkoxy group having 1 to 4 carbon atoms or a branched alkyl group or alkoxy group having 3 to 4 carbon atoms, and they may be the same or different. Among them, $R^3$ and $R^5$ are preferably a linear alkyl group or alkoxy group having 1 to 4 carbon atoms or a branched alkyl group or alkoxy group having 3 to 4 carbon atoms. When $R^3$ to $R^6$ are a linear alkyl group or alkoxy group having 1 to 4 carbon atoms, they have preferably 1 carbon atom and are particularly preferably hydrogen atoms. It is because of the reasons that in all preferred cases, the compound is more readily synthesized and that the vulcanization speed is not delayed.

The specific examples of $R^3$ to $R^6$ in the sulfenamide compound represented by Formula (I) described above include methyl, ethyl, n-propyl, isopropyl, n-butyl, isobutyl, sec-butyl, tert-butyl, methoxy, ethoxy, n-propoxy, isopropoxy, n-butoxy, isobutoxy, sec-butoxy, tert-butoxy and the like.

In the present invention, when both of $R^1$ and $R^2$ in the sulfenamide compound represented by Formula (I) described above are branched alkyl groups, a combination of tert-butyl for $R^1$, isopropyl or 1-methylpropyl for $R^2$ and a hydrogen atom for $R^3$ to $R^6$ is preferred from the viewpoints of having the vulcanization speed equivalent to that of DCBS (DZ), securing the higher adhesion performance and a balance between the vulcanization speed and the adhesive property. When $R^1$ and $R^2$ are branched alkyl groups other than the combination described above, difficulty in the synthesis grows larger.

The particularly preferred combination of $R^1$ and $R^2$ in the sulfenamide compound represented by Formula (I) described above is a combination of tert-butyl for $R^1$, a linear alkyl group having 1 to 10 carbon atoms for $R^2$ and a hydrogen atom for $R^3$ to $R^6$. In the this combination, the combination which is the best mode is a case in which $R^1$ is tert-butyl and $R^2$ is methyl, ethyl, n-propyl or n-butyl each having 4 or less carbon atoms, and more preferably in a case in which $R^2$ has 3 or less carbon atoms, particularly preferably 2 or less carbon atoms. In the case of this combination, a balance between the performances is the best from the viewpoints of having the equal vulcanization speed to that of DCBS (DZ), securing the higher adhesion performance and reducing the accumulativeness in human bodies.

The combination which is the best mode described above can be confirmed from a numerical value of an octanol/water partition coefficient (log P OW) which is one of simplified measures for evaluating a condensation property of chemicals. In the present invention, the smaller the value of log P is, the better the balance between the vulcanization speed, the adhesion performance and the accumulativeness in human bodies is.

In the present invention (including examples and the like described later), the octanol/water partition coefficient (log P) described above can be measured by a high-performance liquid chromatography according to JIS Z 7260-117 (2006), and it is defined by the following equation:

$$\log P = \log (「Co」/「Cw」)$$

Co: concentration of an examined substance in a 1-octanol layer
Cw: concentration of an examined substance in an aqueous layer

The suffix x in the sulfenamide compound represented by Formula (I) described above represents an integer of 1 or 2, and n represents an integer of 0 or 1. From the viewpoint of the effects such as easiness of the synthesis and the costs of the raw materials, n is preferably 0.

As described above, preferred compounds among the sulfenamide compounds represented by Formula (I) which are used in the present invention are listed below in order of preferability. To be specific, preferred from the viewpoints of not accelerating too much the Mooney scorch time, bringing about no rubber burning in processing and avoiding reduction in the workability and deterioration in the adhesive property are 1) the compounds in which in Formula (I) $R^1$ is tert-butyl; n is 0; $R^2$ is a linear alkyl group having 1 to 10 carbon atoms or a branched alkyl group having 3 to 10 carbon atoms; and $R^3$ to $R^6$ are hydrogen atoms, 2) the compounds in which in Formula (I) $R^1$ is tert-butyl; n is an integer of 0 or 1; $R^2$ is a linear alkyl group having 1 to 6 carbon atoms or a branched alkyl group having 3 to 6 carbon atoms; and $R^3$ to $R^6$ are hydrogen atoms, 3) the compounds in which in Formula (I) $R^1$ is tert-butyl; n is 0; $R^2$ is a linear alkyl group having 1 to 6 carbon atoms or a branched alkyl group having 3 to 6 carbon atoms; and $R^3$ to $R^6$ are hydrogen atoms, 4) the compounds in which in Formula (I) $R^1$ is tert-butyl; n is 0; $R^2$ is a linear alkyl group having 4 or less carbon atoms (preferably a linear alkyl group having 3 or less carbon atoms); and $R^3$ to $R^6$ are hydrogen atoms and 5) the compounds in which in Formula (I) $R^1$ is tert-butyl; n is 0; $R^2$ is a linear alkyl group having 2 or less carbon atoms (methyl or ethyl); and $R^3$ to $R^6$ are hydrogen atoms (the compounds of the later order are more preferred sulfenamide compounds).

In a case where $R^1$ in the sulfenamide compound represented by Formula (I) is a functional group (for example, n-octadecyl and the like) other than a branched alkyl group having 3 to 12 carbon atoms or a branched alkyl group having more than 12 carbon atoms, a case where $R^2$ is a functional group (for example, n-octadecyl and the like) other than a linear alkyl group having 1 to 10 carbon atoms or a branched alkyl group having 3 to 10 carbon atoms or a linear or branched alkyl group having more than 10 carbon atoms, a case where $R^3$ to $R^6$ are the respective functional groups falling outside the ranges described above and having carbon atoms falling outside the respective ranges or a case where n is 2 or more, the effects which are the purpose of the present invention are less exhibited, and the productivity is reduced or the adhesive property is deteriorated due to retardation of the suitable scorch time and extension of the vulcanization time, or the vulcanization performance as the accelerator and the rubber performances are deteriorated in a certain case. Further, x of 3 or more is not preferred in terms of the safety. In a case where $R^1$ and $R^2$ in the sulfenamide compound represented by Formula (I) described above are branched alkyl groups respectively, a balance between the vulcanization speed, the adhesion performance and the accumulativeness in human bodies tends to be deteriorated when they are groups having branches at positions other than an $\alpha$-position, for example, 2-ethylhexyl, 2-ethylbutyl and the like, and therefore they have preferably branches at an $\alpha$-position.

In the present invention, the representative examples of the compound represented by Formula (I) include N-methyl-N-t-butylbenzothiazole-2-sulfenamide, N-ethyl-N-t-butylbenzothiazole-2-sulfenamide, N-n-propyl-N-t-butylbenzothiazole-2-sulfenamide, N-isopropyl-N-t-butylbenzothiazole-2-sulfenamide, N-n-butyl-N-t-butylbenzothiazole-2-sulfenamide, N-isobutyl-N-t-butylbenzothiazole-2-sulfenamide, N-sec-butyl-N-t-butylbenzothiazole-2-sulfenamide, N-methyl-N-isoamylbenzothiazole-2-sulfenamide, N-ethyl-N-isoamylbenzothiazole-2-sulfenamide, N-n-propyl-N-isoamylbenzothiazole-2-sulfenamide, N-isopropyl-N-isoamylbenzothiazole-2-sulfenamide, N-n-butyl-N-isoamylbenzothiazole-2-sulfenamide, N-isobutyl-N-isoamylbenzothiazole-2-sulfenamide, N-sec-butyl-N-isoamylbenzothiazole-2-sulfenamide, N-methyl-N-tert-amylbenzothiazole-2-sulfenamide, N-ethyl-N-tert-amylbenzothiazole-2-sulfenamide, N-n-propyl-N-tert-amylbenzothiazole-2-sulfenamide, N-isopropyl-N-tert-amylbenzothiazole-2-sulfenamide, N-n-butyl-N-tert-amylbenzothiazole-2-sulfenamide, N-isobutyl-N-tert-amylbenzothiazole-2-sulfenamide, N-sec-butyl-N-tert-amylbenzothiazole-2-sulfenamide, N-methyl-N-tert-heptylbenzothiazole-2-sulfenamide, N-ethyl-N-tert-heptylbenzothiazole-2-sulfenamide, N-n-propyl-N-tert-heptylbenzothiazole-2-sulfenamide, N-isopropyl-N--tert-heptylbenzothiazole-2-sulfenamide, N-n-butyl-N-tert-heptylbenzothiazole-2-sulfenamide, N-isobutyl-N-tert-heptylbenzothiazole-2-sulfenamide, N-sec-butyl-N-tert-heptylbenzothiazole-2-sulfenamide and the like. The above compounds can be used alone or in a mixture of two or more kinds thereof (hereinafter referred to merely as "at least one").

From the viewpoint of providing more adhesion performance, preferred are N-methyl-N-t-butylbenzothiazole-2-sulfenamide, N-ethyl-N-t-butylbenzothiazole-2-sulfenamide, N-n-propyl-N-t-butylbenzothiazole-2-sulfenamide, N-isopropyl-N-t-butylbenzothiazole-2-sulfenamide, N-isobutyl-N-t-butylbenzothiazole-2-sulfenamide and N-sec-butyl-N-t-butylbenzothiazole-2-sulfenamide.

Among them, particularly N-methyl-N-t-butylbenzothiazole-2-sulfenamide, N-ethyl-N-t-butylbenzothiazole-2-sulfenamide and N-n-propyl-N-t-butylbenzothiazole-2-sulfenamide are preferably used from the viewpoint of providing the longest scorch time and the excellent adhesion performance.

The above compounds may be used alone or in combination thereof. Further, they can be used in combination with general purpose vulcanization accelerators such as N-tert-butyl-2-benzothiazolesulfenamide (TBBS), N-cyclohexyl-2-benzothiazolesulfenamide (CBS), dibenzothiazolyl disulfide (MBTS) and the like.

The following process can be given as the preferred production process for the sulfenamide compound represented by Formula (I) according to the present invention.

That is, N-chloroamine prepared in advance by reacting a corresponding amine with sodium hypochlorite is reacted with bis(benzothiazole-2-yl) disulfide in a suitable solvent under the presence of an amine and a base. When an amine is used as the base, the reaction solution is neutralized to isolate the free amine, and then suitable after-treatments such as filtering, water washing, condensation, recrystallization and the like are carried out according to the properties of the resulting reaction mixture, whereby targeted sulfenamide is obtained.

The base used in the present production process includes the raw material amine used in an excess amount, tertiary amines such as triethylamine, alkali hydroxide, alkali carbonate, alkali bicarbonate, sodium alkoxide and the like. In particular, preferred is a process in which an excess of the raw material amine is used as a base or triethylamine of a tertiary amine is used to carry out the reaction and then the resulting hydrochloride salt is neutralized by sodium hydroxide to obtain the targeted compound, followed by recovering the amine from the filtrate and reusing.

The solvent used in the present production process is preferably alcohol, particularly preferably methanol.

In the case of, for example, N-ethyl-N-t-butylbenzothiazole-2-sulfenamide, a sodium hypochlorite aqueous solution is dropwise added to N-t-butylamine at 0°C or lower and stirred for 2 hours, and then the oil layer is separated. Bis(benzothiazole-2-yl) disulfide, N-t-butylethylamine and the above oil layer are suspended in methanol and stirred for 2 hours under refluxing. After cooling, the solution is neutralized by sodium hydroxide, filtered, washed with water and concentrated under reduced pressure, and then the concentrate is recrystallized, whereby N-ethyl-N-t-butylbenzothiazole-2-sulfenamide (white solid) can be obtained.

A content of the above sulfenamide base vulcanization accelerators is 0.1 to 10 parts by mass, preferably 0.5

to 5.0 parts by mass and more preferably 0.8 to 2.5 parts by mass based on 100 parts by mass of the rubber component. If a content of the above vulcanization accelerator is less than 0.1 part by mass, the vulcanization does not sufficiently proceed. On the other hand, if it exceeds 10 parts by mass, the problem of blooming is brought about, and therefore both range are not preferred.

Sulfur used in the present invention is a vulcanizing agent, and a content thereof is 0.3 to 10 parts by mass, preferably 1.0 to 7.0 parts by mass and more preferably 3.0 to 7.0 parts by mass based on 100 parts by mass of the rubber component.

If a content of the above sulfur is less than 0.3 part by mass, the vulcanization does not sufficiently proceed. On the other hand, if it exceeds 10 parts by mass, an anti-aging performance of the rubber is deteriorated, and therefore it is not preferred.

The compound having a disubstituted or trisubstituted benzene ring in which at least one of the substituents is a hydroxyl group used in the present invention is resorcin or a resorcin base compound, and it is added in order to exert more a stable adhesive property of rubber with metal materials such as steel cords by using in combination with the sulfenamide compound represented by Formula (I) without causing reduction in the physical properties of the rubber after vulcanization.

The compound having a disubstituted or trisubstituted benzene ring in which at least one of the substituents is a hydroxyl group which can be used in the present invention shall not specifically be restricted as long as it is a compound having a disubstituted or trisubstituted benzene ring in which at least one of the substituents is a hydroxyl group, and it is preferably a compound represented by the following Formula (II) from the viewpoint of exerting more a stable adhesive property of rubber with metal materials such as steel cords:

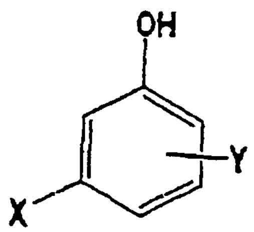

(II)

(wherein X represents a hydroxyl group, a carboxyl group or - $COOC_mH_{2m+1}$ (m is any integer of 1 to 5), and Y is present in a 2-, 4-, 5- or 6-position and represents a hydrogen atom, a hydroxyl group or a substituent represented by the following Formula (III)):

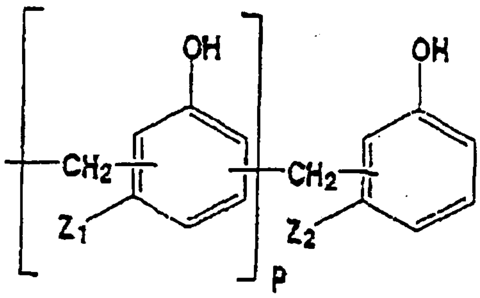

(III)

(wherein $Z_1$ and $Z_2$ each represent independently a hydroxyl group, a carboxyl group or -$COOC_nH_{2n+1}$ (n is any integer of 1 to 5), and p represents any integer of 1 to 7).

The compound represented by Formula (II) or (III) described above includes, for example, at least one of resorcin, resorcin-formaldehyde resins, 3-hydroxybenzoic acid, 3-hydroxybenzoic acid-formaldehyde resins and the like.

A content of the compound represented by Formula (II) falls in a range of preferably 0.1 to 6 parts by mass, more preferably 1 to 4 parts by mass based on 100 parts by mass of the rubber component.

If a content of the compound represented by Formula (II) is less than 0.1 part by mass based on 100 parts by mass of the rubber component, an adhesive property of the rubber with metal materials is reduced, and if it exceeds 6 parts by mass, it is not preferred in terms of blooming.

Further, cobalt (elemental substance) and/or a compound containing cobalt are preferably added to the rubber composition of the present invention from the viewpoint of enhancing the initial adhesion performance.

The compound containing cobalt which can be used includes at least one of cobalt salts of organic acids and cobalt

salts of inorganic acids such as cobalt chloride, cobalt sulfate, cobalt nitrate, cobalt phosphate and cobalt chromate. The cobalt salts of organic acids are preferably used from the viewpoint of further enhancing the initial adhesive performance.
Capable of being given as the cobalt salts of organic acids which can be used is at least one of, for example, cobalt naphthenate, cobalt stearate, cobalt neodecanoate, cobalt rhodinate, cobalt versatate, a cobalt salt of tall oil acid and the like. Also, a cobalt salt of organic acid may be a composite salt obtained by substituting a part of the organic acid with boric acid, and to be specific, a commercially available product of a trade name "Manobond" manufactured by OMG Co., Ltd. can be used as well.

A (total) content of the above cobalt and/or the compound containing cobalt is 0.03 to 3 parts by mass, preferably 0.03 to 1 part by mass and more preferably 0.05 to 0.7 part by mass in terms of a cobalt amount based on 100 parts by mass of the rubber component.
If a content of cobalt is less than 0.03 part by mass, the further adhesive property can not be exhibited. On the other hand, if it exceeds 3 parts by mass, the physical properties against aging deteriorate to a large extent, and therefore it is not preferred.

In addition to the rubber component, sulfur, the sulfenamide base vulcanization accelerator represented by Formula (I), the compound represented by Formula (II) and the cobalt compound each described above, compounding ingredients usually used for rubber products such as tires, conveyor belts and the like can be used for the rubber composition of the present invention as long as the effects of the present invention are not damaged. For example, an inorganic filler such as carbon black and silica, a softener, an age resister and the like can suitably be compounded according to the uses.

The rubber composition of the present invention can be produced by kneading the respective components described above by means of, for example, a Banbury mixer, a kneader and the like, and it can suitably be used for treads of tires for passenger cars, trucks, buses, two-wheel vehicles and the like, rubber products having a large thickness such as hoses, belt conveyors and rubber products in which rubbers are subjected to direct vulcanization bonding with metals.
The rubber composition of the present invention can suitably be applied to rubber products to which strength is particularly required such as tires for automobiles, conveyor belts, hoses, to be specific, rubber-metal composite materials obtained by covering metal-reinforced materials such as steel cords with rubber compositions for the purpose of reinforcing rubber to enhance strength and durability.

It is the first time in the rubber composition of the present invention thus constituted that a rubber composition which is remarkably reduced in generation of rubber burning and which is excellent in an adhesive property with metal such as a steel cord in which a stable adhesive property is exerted with less change with the passage of time while maintaining processability in compounding and a high wet heat resistant adhesive property is obtained by using a vulcanization accelerator having a vulcanization retarding effect which is equivalent to or higher than that of DCBS in combination with a resorcin base compound having a specific structure which can exert a stable adhesive property without using a vulcanization retardant which is likely to bring about problems such as reduction in the physical properties, blooming in rubber after vulcanization.
Further, in the case of the rubber composition further comprising cobalt (elemental substance) and/or the compound containing cobalt, obtained is a rubber composition which is excellent in adhesion durability with metal reinforcing materials such as steel cords used for rubber products such as tires, industrial belts and the like.

## EXAMPLES

Next, the present invention shall be explained in further details with reference to production examples for the vulcanization accelerators of Formula (I) used in the present invention, examples for the rubber compositions of the present invention and comparative examples, but the present invention shall by no means be restricted to the production examples and the examples described below.
The octanol/water partition coefficients (log P) of the vulcanization accelerators obtained in the following respective production examples were measured by a high-performance liquid chromatography according to JIS Z 7260-117 (2006). A high-performance liquid chromatography manufactured by Shimadzu Corporation was used.

Production Example 1: synthesis of N-ethyl-N-t-butylbenzothiazole-2-sulfenamide

A 12 % sodium hypochlorite aqueous solution 148 g was dropwise added to N-t-butylethylamine 16.4 g (0.162 mol) at 0°C or lower and stirred for 2 hours, and then the oil layer was separated. Bis(benzothiazole-2-yl) disulfide 39.8 g (0.120 mol), N-t-butylethylamine 24.3 g (0.240 mmol) and the above oil layer were suspended in 120 ml of methanol and stirred under refluxing for 2 hours. After cooling, the solution was neutralized by sodium hydroxide 6.6 g (0.166 mol), filtered, washed with water and concentrated under reduced pressure, and then the concentrate was recrystallized,

whereby 41.9 g (yield: 66 %) of targeted N-ethyl-N-t-butylbenzothiazole-2-sulfenamide was obtained in the form of white solid (melting point: 60 to 61°C).
The spectral data of N-ethyl-N-t-butylbenzothiazole-2-sulfenamide thus obtained is shown below.
$^1$H-NMR (400 MHz, $CDCl_3$) δ = 1.29 (t, 3H, J = 7.1 Hz, $CH_3$ (ethyl)), 1.34 (s, 9H, $CH_3$ (t-butyl)), 2.9 to 3.4 (br-d, $CH_2$), 7.23 (1H, m), 7.37 (1H, m), 7.75 (1H, m), 7.78 (1H, m): $^{13}$C-NMR (100 MHz, $CDCl_3$) δ = 15.12, 28.06, 47.08, 60.41, 120.70, 121.26, 123.23, 125.64, 134.75, 154.93, 182.63: mass spectrometry (EI, 70 eV): m/z; 251 ($M^+$-$CH_4$), 167 ($M^+$-$C_6H_{14}N$), 100 ($M^+$-$C_7H_5NS_2$):
IR (KBr, $cm^{-1}$): 3061, 2975, 2932, 2868, 1461, 1429, 1393, 1366, 1352, 1309, 1273, 1238, 1198, 1103, 1022, 1011, 936, 895, 756, 727.
An octanol/water partition coefficient (log P) of the N-ethyl-N-t-butylbenzothiazole-2-sulfenamide was 4.9.

Production Example 2: synthesis of N-methyl-N-t-butylbenzothiazole-2-sulfenamide

The same procedure as in Production Example 1 was carried out, except that 14.1 g (0.162 mol) of N-t-butylmethylamine was used in place of N-t-butylethylamine, whereby 46.8 g (yield: 82 %) of N-methyl-N-t-butylbenzothiazole-2-sulfenamide was obtained in the form of white solid (melting point: 56 to 58°C).
$^1$H-NMR (400 MHz, $CDCl_3$) δ = 1.32 (9H, s, $CH_3$ (t-butyl)), 3.02 (3H, s, $CH_3$ (methyl)), 7.24 (1H, m), 7.38 (1H, m), 7.77 (1H, m), 7.79 (1H, m):
$^{13}$C-NMR (100 MHz, $CDCl_3$) δ = 27.3, 41.9, 59.2, 120.9, 121.4, 123.3, 125.7, 135.0, 155.5, 180.8:
mass spectrometry (EI, 70 eV): m/z; 252 ($M^+$), 237 ($M^+$-$CH_3$), 223 ($M^+$-$C_2H_6$), 195 ($M^+$-$C_4H_9$), 167 ($M^+$-$C_5H_{12}N$), 86 ($M^+$-$C_7H_4NS_2$).
An octanol/water partition coefficient (log P) of the N-methyl-N-t-butylbenzothiazole-2-sulfenamide was 4.5.

Production Example 3: synthesis of N-n-propyl-N-t-butylbenzothiazole-2-sulfenamide

The same procedure as in Production Example 1 was carried out, except that 18.7 g (0.162 mol) of N-n-propyl-t-butylamine was used in place of N-t-butylethylamine, whereby N-n-propyl-N-t-butylbenzothiazole-2-sulfenamide was obtained in the form of white solid (melting point: 50 to 52°C).
$^1$H-NMR (400 MHz, $CDCl_3$) δ : 0. 92 (t, J = 7. 3 Hz, 3H), 1.34 (s, 9H), 1.75 (br, 2H), 3.03 (brd, 2H), 7.24 (t, J = 7.0 Hz, 1H), 7.38 (t, J = 7.0 Hz, 1H), 7.77 (d, J = 7.5 Hz, 1H), 7.79 (d, J = 7.5 Hz, 1H).
$^{13}$C-NMR (100 MHz, $CDCl_3$) δ : 11.7, 23.0, 28.1, 55.3, 60.4, 120.7, 121.3, 123.3, 125.7, 134.7, 154.8, 181.3.
An octanol/water partition coefficient (log P) of the N-n-propyl-N-t-butylbenzothiazole-2-sulfenamide was 5.3.

Production Example 4: synthesis of N-i-propyl-N-t-butylbenzothiazole-2-sulfenamide

The same procedure as in Production Example 1 was carried out, except that 18.7 g (0.162 mol) of N-i-propyl-t-butylamine was used in place of N-t-butylethylamine, whereby N-i-propyl-N-t-butylbenzothiazole-2-sulfenamide was obtained in the form of white solid (melting point: 68 to 70°C).
$^1$H-NMR (400 MHz, $CDCl_3$) δ : 1.20 to 1.25 (dd, (1.22 ppm: J = 6.4 Hz, 1.23 ppm: J = 6.4 Hz) 6H), 1.37 (s, 9H), 3.78 (m, J = 6.3 Hz, 1H), 7.23 (t, J = 7.0 Hz, 1H), 7.38 (t, J = 7.0 Hz, 1H), 7.77 (d, J = 7.5 Hz, 1H), 7.79 (d, J = 7.5 Hz, 1H).
$^{13}$C-NMR (100 MHz, $CDCl_3$) δ : 22.3, 23.9, 29.1, 50. 6, 61. 4, 120.6, 121.2, 123.2, 125.6, 134.5, 154.5, 183.3.
An octanol/water partition coefficient (log P) of the N-i-propyl-N-t-butylbenzothiazole-2-sulfenamide was 5.1.

Production Example 5: synthesis of N,N-di-i-propylbenzothiazole-2-sulfenamide

The same procedure as in Production Example 1 was carried out, except that 16.4 g (0.162 mol) of N-di-i-propylamine was used in place of N-t-butylethylamine, whereby N,N-di-i-propylbenzothiazole-2-sulfenamide was obtained in the form of white solid (melting point: 57 to 59°C).
$^1$H-NMR (400 MHz, $CDCl_3$) d 1.26 (d, J = 6.5 Hz, 12H), 3.49 (dq, J = 6.5 Hz, 2H), 7.24 (t, J = 7.0 Hz, 1H), 7.37 (t, J = 7.0 Hz, 1H), 7.75 (d, J = 8.6 Hz, 1H), 7.79 (d, J = 8.6 Hz, 1H).
$^{13}$C-NMR (100 MHz, $CDCl_3$) d 21.7, 22.5, 55.7, 120.8, 121.3, 123.4, 125.7, 134.7, 155.1, 182.2.
Mass spectrometry (EI, 70 eV): m/z; 266 ($M^+$), 251 ($M^+$-15), 218 ($M^+$-48), 209 ($M^+$-57), 182 ($M^+$-84), 167 ($M^+$-99), 148 ($M^+$-118), 100 ($M^+$-166: base).

Production Example 6: synthesis of N-n-butyl-N-t-butylbenzothiazole-2-sulfenamide

The same procedure as in Production Example 1 was carried out, except that 20.9 g (0.162 mol) of N-t-butyl-n-butylamine was used in place of N-t-butylethylamine, whereby 42.4 g (yield: 60 %) of N-n-butyl-N-t-butylbenzothiazole-2-sulfenamide was obtained in the form of white solid (melting point: 55 to 56°C).
$^1$H-NMR (400 MHz, $CDCl_3$) $\delta$ = 0.89 (3H, t, J = 7.32 Hz, $CH_3$ (n-Bu)), 1.2 to 1.4 (s + m, 11H, $CH_3$ (t-butyl) + $CH_2$ (n-butyl)), 1.70 (br. s, 2H, $CH_2$), 2.9 to 3.2 (br. d, 2H, N-$CH_2$), 7.23 (1H, m), 7.37 (1H, m), 7.75 (1H, m), 7.78 (1H, m); $^{13}$C-NMR (100 MHz, $CDCl_3$) $\delta$ : 14.0, 20.4, 27.9, 31.8, 53.0, 60.3, 120.6, 121.1, 123.1, 125.5, 134.6, 154.8, 181.2; mass spectrometry (EI, 70 eV): m/z; 294 ($M^+$), 279 ($M^+$-$CH_3$), 237 ($M^+$-$C_4H_9$), 167 ($M^+$-$C_8H_{18}N$), 128 ($M^+C_7H_4NS_2$) :
IR (neat): 1707 $cm^{-1}$, 3302 $cm^{-1}$.
An octanol/water partition coefficient (log P) of the N-n-butyl-N-t-butylbenzothiazole-2-sulfenamide was 5.8.

Examples 1 to 9 and Comparative Examples 1 to 11

The rubber component, sulfur, the respective vulcanization accelerators obtained in Production Examples 1 to 6 described above, resorcin, a cobalt salt of organic acid and other compounding agents were mixed and kneaded in blending formulations shown in the following Table 1 and Table 2 by means of a Banbury mixer of 2200 ml to prepare unvulcanized rubber compositions, and the blooming resistance, the Mooney viscosity, the Mooney scorch time and the adhesion performances (heat resistant adhesive property and wet heat adhesive property) were evaluated by the following methods. The results thereof are shown in the following Table 1 and Table 2.

(1) Evaluation methods of Mooney viscosity and Mooney scorch time:

Evaluated according to JIS K 6300-1 : 2001.

In the evaluations, the values were shown by indices, wherein the values obtained in Comparative Example 1 were set to 100. In the case of the Mooney viscosity, the smaller value shows that the workability is better, and in the case of the Mooney scorch time, the larger value shows that the workability is better.

(2) Evaluation methods of heat resistant adhesive property and wet heat adhesive property:

Steel cords (1 × 5 structure, wire diameter: 0.25 mm) plated with brass (Cu: 63 % by mass, Zn: 37 % by mass) were arranged parallel at an interval of 12.5 mm, and these steel cords were coated with the above unvulcanized rubber compositions from both the upper and lower sides and immediately vulcanized at 160°C for 20 minutes to prepare samples having a width of 12.5 mm. Next, the steel cords of the above samples were drawn out according to ASTM-D-2229 to visually observe the covering states of the rubbers, and the covering rates were shown by 0 to 100 % as an index for the respective adhesive properties. The larger numerical value shows that the adhesive property is higher and better.
In the case of the heat resistant adhesive property, after the respective samples were left standing in a gear oven of 100°C for 15 days and 30 days, the steel cords were drawn out from them according to the test method described above to visually observe the covering states of the rubbers, and they were shown by 0 to 100 % as an index for the respective adhesive properties. The larger numerical value shows that the heat resistant adhesive property is excellent.
The wet heat adhesive property is a result obtained by aging the sample under the wet and heat conditions of 70°C, 100 % RH and 4 days after vulcanized and then measuring it.
Table 1

| | | Example | | | | | | Comparative Example | | | | | | | | |
|---|---|---|---|---|---|---|---|---|---|---|---|---|---|---|---|---|
| | | 1 | 2 | 3 | 4 | 5 | 6 | 1 | 2 | 3 | 4 | 5 | 6 | 7 | 8 | 9 |
| Natural rubber | | 100 | 100 | 100 | 100 | 100 | 100 | 100 | 100 | 100 | 100 | 100 | 100 | 100 | 100 | 100 |
| HAF carbon black | | 60 | 60 | 60 | 60 | 60 | 60 | 60 | 60 | 60 | 60 | 60 | 60 | 60 | 60 | 60 |
| Zinc oxide | | 8 | 8 | 8 | 8 | 8 | 8 | 8 | 8 | 8 | 8 | 8 | 8 | 8 | 8 | 8 |
| Age resister *1 | | 2 | 2 | 2 | 2 | 2 | 2 | 2 | 2 | 2 | 2 | 2 | 2 | 2 | 2 | 2 |
| Vulcanization accelerator 1 (DZ) *2 | | | | | | | | 1 | | 1 | | | | | | |
| Vulcanization accelerator 2 (CZ) *3 | | | | | | | | | 1 | | | | | | | |
| Sulfur | | 5 | 5 | 5 | 5 | 5 | 5 | 5 | 5 | 5 | 5 | 5 | 5 | 5 | 5 | 5 |
| Cobalt salt of fatty acid *4 | | 1 | 1 | 1 | 1 | 1 | 1 | 1 | 1 | 1 | 1 | 1 | 1 | 1 | 1 | 1 |
| Novel vulcanization accelerator 1 *5 | | 1 | | | | | | | | | 1 | | | | | |
| Novel vulcanization accelerator 2 *6 | | | 1 | | | | | | | | | 1 | | | | |
| Novel vulcanization accelerator 3 *7 | | | | 1 | | | | | | | | | 1 | | | |
| Novel vulcanization accelerator 4 *8 | | | | | 1 | | | | | | | | | 1 | | |
| Novel vulcanization accelerator 5 *9 | | | | | | 1 | | | | | | | | | 1 | |
| Novel vulcanization accelerator 6 *10 | | | | | | | 1 | | | | | | | | | 1 |
| Resorcin | | 2.5 | 2.5 | 2.5 | 2.5 | 2.5 | 2.5 | | | 2.5 | | | | | | |
| Mooney viscosity ($ML_{1+4}$) | | 97 | 97 | 97 | 97 | 97 | 97 | 100 | 100 | 100 | 95 | 95 | 95 | 95 | 95 | 95 |
| Mooney scorch time (t1) | | 107 | 115 | 115 | 120 | 115 | 115 | 100 | 70 | 100 | 105 | 110 | 110 | 115 | 112 | 111 |
| Heat resistant adhesive property | Degradation in 15 days | 90 | 90 | 85 | 75 | 75 | 75 | 70 | 60 | 70 | 90 | 90 | 85 | 75 | 75 | 75 |
| | Degradation in 30 days | 60 | 60 | 55 | 45 | 40 | 40 | 40 | 20 | 40 | 60 | 60 | 55 | 45 | 40 | 40 |
| Wet heat adhesive property (%) | | 85 | 85 | 85 | 85 | 85 | 85 | 30 | 50 | 80 | 20 | 25 | 30 | 35 | 35 | 35 |

Table 2

| | | Example | | | Comparative Example | |
|---|---|---|---|---|---|---|
| | | 7 | 8 | 9 | 10 | 11 |
| Natural rubber | | 100 | 90 | 90 | 90 | 90 |
| Butadiene rubber *11 | | | 10 | | 10 | |
| Styrene butadiene rubber *12 | | | | 10 | | 10 |
| HAF carbon black | | 60 | 60 | 60 | 60 | 60 |
| Zinc oxide | | 8 | 8 | 8 | 8 | 8 |
| Age resister *1 | | 2 | 2 | 2 | 2 | 2 |
| Vulcanization accelerator 1 (DZ) *2 | | | | | 1 | 1 |
| Vulcanization accelerator 2 (CZ) *3 | | 0.2 | | | | |
| Sulfur | | 5 | 5 | 5 | 5 | 5 |
| Cobalt salt of fatty acid *4 | | 1 | 1 | 1 | 1 | 1 |
| Novel vulcanization accelerator 2 *6 | | 0.8 | 1 | 1 | | |
| Resorcin | | 2.5 | 2.5 | 2.5 | 2.5 | 2.5 |
| Mooney viscosity ($ML_{1+4}$) | | 94 | 92 | 93 | 97 | 101 |
| Mooney scorch time (t1) | | 99 | 114 | 75 | 107 | 109 |
| Heat resistant adhesive property | Degradation in 15 days | 85 | 85 | 80 | 65 | 60 |
| | Degradation in 30 days | 50 | 60 | 55 | 40 | 35 |

(continued)

| | Example | | | Comparative Example | |
|---|---|---|---|---|---|
| | 7 | 8 | 9 | 10 | 11 |
| Wet heat resistant adhesive property (%) | 90 | 85 | 85 | 80 | 80 |

*1 to *12 in Tables 1 and 2 described above show the followings.
*1: N-phenyl-N'-1,3-dimethylbutyl-p-phenylenediamine (trade name: Nocceler 6C, manufactured by Ouchi Shinko Chemical Industrial Co., Ltd.)
*2: N,N'-dicyclohexyl-2-benzothiazylsulfenamide (trade name: Nocceler DZ, manufactured by Ouchi Shinko Chemical Industrial Co., Ltd.)
*3: N-cyclohexyl-2-benzothiazylsulfenamide (trade name: Nocceler CZ, manufactured by Ouchi Shinko Chemical Industrial Co., Ltd.)
*4: Trade name: Manobond C22.5, cobalt content: 22.5 % by mass, manufactured by OMG Co., Ltd.)
*5: N-methyl-N-t-butylbenzothiazole-2-sulfenamide
*6: N-ethyl-N-t-butylbenzothiazole-2-sulfenamide
*7: N-n-propyl-N-t-butylbenzothiazole-2-sulfenamide
*8: N-i-propyl-N-t-butylbenzothiazole-2-sulfenamide
*9: N,N-di-i-propylbenzothiazole-2-sulfenamide
*10: N-n-butyl-N-t-butylbenzothiazole-2-sulfenamide
*11: BR01
*12: SBR #1778

As apparent from the results shown in Table 1 and Table 2, it has been found that the rubber compositions prepared in Examples 1 to 9 which fall in the scope of the present invention are the rubber compositions containing 4 components comprising a rubber component, sulfur, a sulfenamide compound represented by Formula (I) and the compound having a disubstituted or trisubstituted benzene ring in which at least one of the substituents is a hydroxyl group and they can be extended in a Mooney scorch time as compared with those of the rubber compositions prepared in Comparative Examples 1 to 11 comprising 3 components of the rubber component, sulfur and the sulfenamide compound represented by Formula (I) or the compound having a disubstituted or trisubstituted benzene ring in which at least one of the substituents is a hydroxyl group, so that they are excellent in workability and excellent as well in a heat resistant adhesive property and a wet heat adhesive property.

Industrial Applicability

The rubber composition of the present invention can suitably be applied to treads of tires for passenger cars, trucks, buses, two-wheel vehicles and the like, rubber products having a large thickness such as hoses, belt conveyors and the like and rubber products in which rubber is subjected to direct vulcanization bonding with metals.

## Claims

1. A rubber composition comprising a rubber component, sulfur, a sulfenamide base vulcanization accelerator represented by the following Formula (I) and a compound having a disubstituted or trisubstituted benzene ring in which at least one of the substituents is a hydroxyl group:

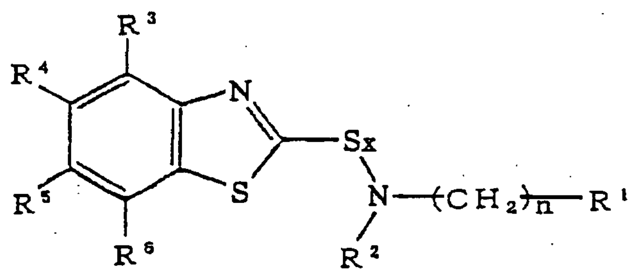

(I)

(wherein $R^1$ is a branched alkyl group having 3 to 12 carbon atoms; $R^2$ is a linear alkyl group having 1 to 10 carbon atoms or a branched alkyl group having 3 to 10 carbon atoms; $R^3$ to $R^6$ are a hydrogen atom, a linear alkyl group or alkoxy group having 1 to 4 carbon atoms or a branched alkyl group or alkoxy group having 3 to 4 carbon atoms, and they may be the same or different; x represents an integer of 1 or 2, and n represents an integer of 0 or 1).

**2.** The rubber composition as described in claim 1, comprising 0.1 to 10 parts by mass of the sulfenamide base vulcanization accelerator represented by Formula (I) and 0.1 to 6 parts by mass of the compound having a disubstituted or trisubstituted benzene ring in which at least one of the substituents is a hydroxyl group based on 100 parts by mass of the rubber component.

**3.** The rubber composition as described in claim 1, comprising 0.3 to 10 parts by mass of sulfur based on 100 parts by mass of the rubber component.

**4.** The rubber composition as described in claim 1, comprising 0.3 to 10 parts by mass of sulfur, 0.1 to 10 parts by mass of the sulfenamide base vulcanization accelerator represented by Formula (I) and 0.1 to 6 parts by mass of the compound having a disubstituted or trisubstituted benzene ring in which at least one of the substituents is a hydroxyl group based on 100 parts by mass of the rubber component.

**5.** The rubber composition as described in claim 1, wherein the branched alkyl group of $R^1$ and $R^2$ in Formula (I) has a branch at an $\alpha$-position.

**6.** The rubber composition as described in claim 1, wherein $R^1$ in Formula (I) is a tert-butyl group, and n is 0.

**7.** The rubber composition as described in claim 1, wherein $R^1$ in Formula (I) is a tert-butyl group; $R^2$ is a linear alkyl group having 1 to 6 carbon atoms or a branched alkyl group having 3 to 6 carbon atoms; and $R^3$ to $R^6$ are hydrogen atoms.

**8.** The rubber composition as described in claim 1, wherein $R^1$ in Formula (I) is a tert-butyl group; n is 0; $R^2$ is a linear alkyl group having 1 to 6 carbon atoms or a branched alkyl group having 3 to 6 carbon atoms; and $R^3$ to $R^6$ are hydrogen atoms.

**9.** The rubber composition as described in claim 1, wherein $R^1$ in Formula (I) is a tert-butyl group; n is 0; $R^2$ is a methyl, ethyl or n-propyl group; and $R^3$ to $R^6$ are hydrogen atoms.

**10.** The rubber composition as described in claim 1, wherein $R^1$ in Formula (I) is a tert-butyl group; n is 0; $R^2$ is an ethyl; and $R^3$ to $R^6$ are hydrogen atoms.

**11.** The rubber composition as described in claim 1, wherein the compound having a disubstituted or trisubstituted benzene ring in which at least one of the substituents is a hydroxyl group is a compound represented by the following Formula (II):

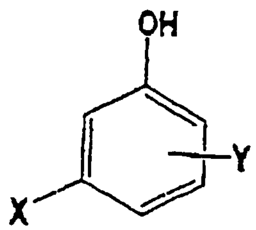

(II)

(wherein X represents a hydroxyl group, a carboxyl group or - $COOC_mH_{2m+1}$ (m is any integer of 1 to 5), and Y is present in a 2-, 4-, 5- or 6-position and represents a hydrogen atom, a hydroxyl group or a substituent represented by the following Formula (III)):

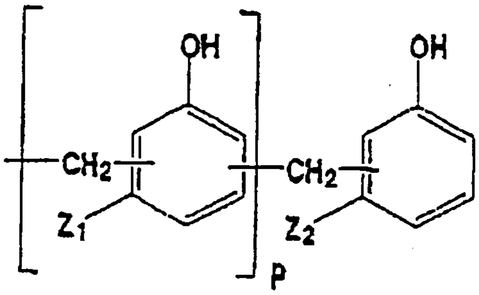

(III)

(wherein $Z_1$ and $Z_2$ each represent independently a hydroxyl group, a carboxyl group or $-COOC_nH_{2n+1}$ (n is any integer of 1 to 5), and p represents any integer of 1 to 7).

**12.** The rubber composition as described in claim 1, further comprising cobalt and/or a compound containing cobalt.

**13.** The rubber composition as described in claim 12, wherein a content of cobalt and/or the compound containing cobalt is 0.03 to 3 parts by mass in terms of a cobalt amount based on 100 parts by mass of the rubber component.

**14.** The rubber composition as described in claim 12 or 13, wherein the compound containing cobalt is a cobalt salt of organic acid.

**15.** The rubber composition as described in any one of claims 1 to 14, wherein the rubber component contains at least one of natural rubber and polyisoprene rubber.

**16.** The rubber composition as described in any one of claims 1 to 14, wherein the rubber component comprises 50 % by mass or more of natural rubber and the balance of a synthetic rubber.

**INTERNATIONAL SEARCH REPORT**

International application No.
PCT/JP2009/062138

A. CLASSIFICATION OF SUBJECT MATTER
C08L21/00(2006.01)i, C08K3/06(2006.01)i, C08K5/13(2006.01)i, C08K5/47 (2006.01)i

According to International Patent Classification (IPC) or to both national classification and IPC

B. FIELDS SEARCHED

Minimum documentation searched (classification system followed by classification symbols)
C08L21/00-21/10, C08K3/06, C08K5/13-5/138, C08K5/47

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2005-112918 A (Tokuyama Corp.), 28 April, 2005 (28.04.05), Claims 1, 3; Par. Nos. [0013] to [0015], [0021], [0053], [0055], [0058], [0093]; example 3 (Family: none) | 1-5,11-16<br>6-10 |
| Y | JP 10-251449 A (Bridgestone Corp.), 22 September, 1998 (22.09.98), Claims 1, 3; Par. Nos. [0001], [0002], [0039], [0050] & US 5939493 A & EP 864604 A2 | 1-16 |
| Y<br>A | JP 2005-139239 A (Sanshin Chemical Industry Co., Ltd.), 02 June, 2005 (02.06.05), Claims 5, 13, 14; Par. Nos. [0001], [0024] (Family: none) | 1-5,11-16<br>6-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 August, 2009 (25.08.09) | 08 September, 2009 (08.09.09) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2009/062138

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2005-139082 A (Sanshin Chemical Industry Co., Ltd.),<br>02 June, 2005 (02.06.05),<br>Claim 3; Par. Nos. [0030], [0031]<br>(Family: none) | 1-5,11-16<br>6-10 |
| Y<br>A | JP 2007-063245 A (Kawaguchi Chemical Industry Co., Ltd.),<br>15 March, 2007 (15.03.07),<br>Claims 1, 2; Par. Nos. [0002], [0009]<br>(Family: none) | 1-5,11-16<br>6-10 |
| Y | JP 2001-234140 A (Bridgestone Corp.),<br>28 August, 2001 (28.08.01),<br>Claims 1 to 3; Par. Nos. [0001] to [0004], [0007]<br>(Family: none) | 1-16 |
| Y | JP 2007-297593 A (Sumitomo Rubber Industries, Ltd.),<br>15 November, 2007 (15.11.07),<br>Claim 1<br>& US 2009/0169883 A & EP 1988121 A1<br>& WO 2007/113994 A1 & CN 101415766 A | 1-16 |
| Y | JP 2007-112833 A (Bridgestone Corp.),<br>10 May, 2007 (10.05.07),<br>Claim 5<br>(Family: none) | 1-16 |
| Y | JP 2006-249361 A (Bridgestone Corp.),<br>21 September, 2006 (21.09.06),<br>Claim 1<br>(Family: none) | 1-16 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005139082 A
- JP 2005139239 A
- EP 0314663 A1
- GB 1177790 A
- JP 11214 A
- JP 2001234140 A


### Non-patent literature cited in the description


- *JIS Z 7260-117,* 2006